# EUROPEAN PATENT SPECIFICATION

(11) **EP 3 064 566 B1**
(45) Date of publication and mention of the grant of the patent: **10.05.2023**
(21) Application number: 14858529.2
(22) Date of filing: 31.10.2014
(51) Int. Cl.: C12G 3/04

(54) **CITRUS FRUIT INFUSED LIQUOR**
MIT ZITRUSFRÜCHTEN INFUNDIERTE SPIRITUOSE
LIQUEUR INFUSÉE À BASE D'AGRUMES

(30) Priority: 01.11.2013 JP 2013228175
(43) Date of publication of application: 07.09.2016
(73) Proprietor: Suntory Holdings Limited, Osaka-shi, Osaka 530-8203 (JP)
(72) Inventor: YOSHIHIRO, Akira, Kawasaki-shi Kanagawa 211-0067 (JP)
(74) Representative: Vossius & Partner Patentanwälte Rechtsanwälte mbB
(86) International application number: PCT/JP2014/079095
(87) International publication number: WO 2015/064748

(56) References cited:
- EP-A1- 1 987 725
- WO-A1-2006/009252
- WO-A1-2006/009252
- WO-A1-2008/153118
- JP-A- H06 153 897
- JP-A- 2000 350 571
- JP-A- 2004 290 002
- JP-A- 2004 290 002
- JP-A- 2007 074 925

## Description

### TECHNICAL FIELD

The present invention relates to infused liquors obtained by infusing kumquat citrus fruits in an alcohol.

### BACKGROUND ART

In recent years, there have been developed various types of beverages in order to satisfy consumers' diversified preferences. Among them, citrus fruit-flavored beverages are especially high in popularity. This is believed to be because those beverages having a moderate sweet-acid taste coupled with a crisp fragrance characteristic of citrus give a unique refreshing sensation. As materials for imparting such a citrus fruit flavor to beverages, citrus fruit-like aroma components (flavorants) have been developed (Patent Literatures 1 to 3).

### CITATION LIST

### PATENT LITERATURES

Patent Literature 1: Japanese Patent Application Publication No. JP 2008-308456
Patent Literature 2: Japanese Patent Application Publication No. JP 2009-82048
Patent Literature 3: Japanese Patent Application Publication No. JP 2009-203438
EP 1 987 725 describes an infused liquor obtained by infusing a citrus fruit (kumquat mentioned in a very long list) in an alcohol and removing insoluble solids remaining after infusion for a prescribed period of time. JP 2004 290002 describes an alcoholic beverage useful as raw material for fruit wines, such as Japanese plum wine, and comprises specified amounts of sweetener and alcohol. Kumquat is mentioned in a long list as fresh-fruit immersed to the alcoholic beverage for fruit wines. WO 2006/009252 discloses an infused liquor obtained by infusing a citrus fruit (kumquat mentioned in a very long list) in an alcohol and removing insoluble solids remaining after infusion for a prescribed period of. JP 2000 350571 describes an alcoholic beverage useful as raw material for fruit wines, such as Japanese plum wine, comprises specified amounts of sweetener and alcohol. Kumquat is mentioned in a long list as fresh-fruit immersed to the alcoholic beverage for fruit wines.

### SUMMARY OF INVENTION

### TECHNICAL PROBLEM

There are known various aroma components having a citrus fruit fragrance, but it is not always possible to produce a favorable beverage having a citrus fruit flavor simply by adding such aroma components to a beverage. Since each aroma component has its unique characteristics, it is not easy to determine which of those numerous aroma components should be combined in what way to obtain a desired aroma. Also, even by adding a citrus fruit juice *per se* to a beverage such as liquor, it is not always possible to obtain a favorable flavor unique to citrus. The present invention which places a focus on the refreshing aroma of citrus fruits has as its object to provide an infused liquor which can impart a refreshing citrus fruit aroma particularly when mixed with other beverage. In particular, this invention provides an infused liquor which has not only a refreshing citrus aroma but also a mild, sweet, floral aroma, which tastes acidic but is not so much stimulating and has a pleasant mouthfeel as well, and which provides a crisp sensation in the mouth after drinking.

### SOLUTION TO PROBLEM

The invention is defined by the claims. The citrus fruit used in the invention is kumquat. The present inventors have made intensive studies and, as a result, found that infused liquors obtained by infusing citrus fruit kumquat in an alcohol, characterized by having a geranyl acetate concentration of not less than 2.5 ppm, a weight ratio of geranyl acetate to citral (geranyl acetate/citral ratio) of from 0.1 to 11, and a weight ratio of malic acid to citric acid (malic acid/citric acid ratio) of from 0.5 to 10 can achieve the desired effects on flavor in that they can impart a refreshing citrus aroma and a sweet, floral aroma when mixed with other beverages, and that they can provide a refreshing sensation in the mouth after drinking. The present invention includes, but is not limited to, the following.
1. An infused liquor obtained by infusing a citrus fruit kumquat in an alcohol, the infused liquor having:
   a geranyl acetate concentration of not less than 2.5 ppm,
   a weight ratio of geranyl acetate to citral (geranyl acetate/citral ratio) of from 0.1 to 11, and
   a weight ratio of malic acid to citric acid (malic acid/citric acid ratio) of from 0.5 to 10.
2. The infused liquor as set forth in 1, having an alcohol content of not less than 40% v/v.
3. The infused liquor as set forth in 1 or 2, having a Brix value of not less than 15%.
4. The infused liquor as set forth in any one of 1 to 3 having a naringin concentration of from 1.0 to 100 ppm.
5. The infused liquor as set forth in any one of 1 to 5, having a citral concentration of from 0.3 to 40 ppm.
6. A beverage having the infused liquor as set forth in any one of 1 to 6 mixed therewith at a concentration of from 0.1 to 50% v/v.
7. A process for preparing the infused liquor as set forth in any one of 1 to 5 the process comprising the steps of:
   infusing kumquat citrus fruit in an alcohol, and
   removing insoluble solids remaining after infusion for a prescribed period of time.
8. A process for preparing a beverage, the process comprising the steps of:
   infusing kumquat citrus fruit in an alcohol,
   removing insoluble solids remaining after infusion for a prescribed period of time to thereby obtain the infused liquor as set forth in any one of 1 to 5, and
   mixing the infused liquor obtained with other beverage.

### ADVANTAGEOUS EFFECTS OF INVENTION

The present invention can provide an infused liquor which has not only a refreshing citrus aroma but also a mild, sweet, floral aroma, which tastes acidic but is not so much stimulating and has a pleasant mouthfeel as well, and which provides a refreshing sensation in the mouth after drinking. The infused liquor of this invention can be optimally used as a liquor for blending (feedstock liquor) which is intended for use in imparting a refreshing citrus fruit flavor particularly when mixed with other beverage. In addition, the inventive infused liquor has a tendency to be hard to deteriorate during storage.

### DESCRIPTION OF EMBODIMENTS

The infused liquor of the present invention is prepared by infusing kumquat citrus fruit in an alcohol. As referred to herein, the "alcohol" refers to ethyl alcohol (ethanol), unless otherwise specified.

### <Aroma and taste components of infused liquor>

The infused liquor of the present invention is characterized by containing geranyl acetate at a concentration of not less than 2.5 ppm and by having a weight ratio of geranyl acetate to citral (geranyl acetate/citral ratio) of from 0.1 to 11. Geranyl acetate, which is a natural organic compound classified as a monoterpene, is an aroma component having a sweet, rose-like aroma. The inventive infused liquor contains geranyl acetate at a concentration of not less than 2.5 ppm. Citral, which is also a natural organic compound classified as a monoterpene, contains both *cis-* and *trans*-isomers. Citral has an intense, lemon-like aroma. The inventive infused liquor has a weight ratio of geranyl acetate to citral (geranyl acetate/citral ratio) of from 0.1 to 11. Adjusting the weight ratio of geranyl acetate to citral to lie within this range achieves a good balance between a refreshing citrus aroma and a sweet, floral citrus aroma without making a sourish citrus aroma too intense. Also, adjusting in which way provides a liquor that makes one less perceive deterioration in citrus aroma during storage. The concentration of citral in the infused liquor is not limited and is generally in the range of approximately from 0.3 to 40 ppm.

The contents of the aforementioned aroma components in the inventive infused liquor can be determined by gas chromatography (GC).

The infused liquor of the present invention is further characterized by having a weight ratio of malic acid to citric acid (malic acid/citric acid ratio) of from 0.5 to 10. Adjusting the weight ratio of malic acid to citric acid to lie within this range can provide a beverage which makes one feel the depth of acidity but is not too intense in acidity and has a pleasant taste. The weight ratio of malic acid to citric acid is preferably in the range of from 1 to 8. The concentration of malic acid in the infused liquor is preferably not less than 0.6 g/L.

The infused liquor of the present invention has a naringin concentration of preferably from 1.0 to 100 ppm, more preferably from 2 to 10 ppm. Naringin is a component that is abundant near the skin of citrus fruits and which is the origin of the bitterness and stimulating sensation of citrus fruits. A beverage containing naringin at too high a concentration has intense bitterness and a bad aftertaste. In contrast, a beverage containing naringin at too low a concentration has a tendency to make one less perceive a crisp citrus fruit aftertaste.

The contents of taste components such as malic acid, citric acid, and naringin in the inventive infused liquor can be determined by high performance liquid chromatography (HPLC).

The infused liquor of the present invention contains the aforementioned aroma and taste components (hereinafter also collectively referred to as "flavor components") in the particular amounts and at the particular ratios as defined above. In order to achieve the aforementioned amounts and weight ratios of the flavor components, their amounts and weight ratios may be adjusted to the specified levels by, for example, adding various flavor components to an infused liquor. However, in order to obtain a more natural citrus fruit flavor, it may well be more preferred to adjust the amounts and weight ratios of the different flavor components extracted from a citrus fruit to lie within the aforementioned specified ranges by varying the conditions for infusing the citrus fruit in an alcohol.

### <Infusion of kumquat citrus fruit in an alcohol>

The infused liquor of the present invention can be obtained by infusing kumquat citrus fruit in an alcohol. The present inventors found that the aforementioned desired balance between the flavor components can be easily achieved particularly in the case of using a kumquat fruit as a citrus fruit to be infused in an alcohol.

Kumquat (or cumquat) belongs to the genus *Fortunella* in the "true citrus fruit tree" group of the subfamily *Aurantioideae* under the family *Rutaceae.* There are multiple varieties of kumquat, such as: oval kumquat (*Fortunella margarita*), a variety bearing long and thin oval fruits; and round kumquat (*Fortunella japonica),* a variety bearing round fruits; and all of those kumquat varieties can be used in the present invention. Kumquat is characterized in the following respects: it has a soft skin; it is low in bitterness because of having only a thin layer of albedo (a white spongy or fibrous portion inside the skin of a citrus fruit); it has a fragrant aroma; and it has a sweetness/acidity balance like that of an intermediate between lemon and orange. This citrus fruit can also be eaten with the skin on. Such characteristics of kumquat are believed to elicit a not-too-sour, not-too-sweet taste, a refreshing aroma characteristic of citrus, and a well-balanced sweet-acid taste.

The citrus fruit to be infused in an alcohol may be used as it is in its entirety or cut into pieces of suitable size. In the present invention, infusing the whole fruit of kumquat as it is in an alcohol is preferred from the viewpoints of flavor balance and ease of handling.

The type of an alcohol to be used in infusing a citrus fruit is not particularly limited as long as it is a commonly consumed alcoholic liquor. Examples of the alcohol that can be used include: distilled liquors such as whisky, vodka, rum, shochu and spirits; brewed alcoholic beverages such as rice wine, wine and beer; and mixed liquors such as liqueur. When the infused liquor of the present invention is intended for use as a blending material (feedstock liquor) for mixing with different beverages, a liquor having a not so strong flavor is preferably used as an alcohol for infusing a citrus fruit, and a continuously distilled spirit or alcohol obtained by distilling an alcohol-containing substance in a continuous still can be more preferably used. Specific examples of such a continuously distilled spirit and alcohol include: spirits with a weak aroma, such as vodka, as defined in the Japanese liquor tax law; feedstock alcohols such as neutral spirits and grain spirits; and continuously distilled shochu (what is called in Japan, "Ko-type shochu"). A single type of alcohol may be used alone depending on the desired quality and intended use of the infused liquor, or two or more types of alcohols may be used in combination for the purpose of varying the flavor characteristics of the infused liquor.

The alcohol content of the alcohol to be used in infusing a citrus fruit is preferably not less than 40% v/v. When using an alcohol with an alcohol content of less than 40% v/v, it is in some cases not possible to fully extract the desired aroma components. The alcohol content of said alcohol is more preferably not less than 45% v/v, still more preferably not less than 50% v/v. The upper limit for the alcohol content is not particularly limited but is preferably not more than 96% v/v. This is because common alcohols obtained by distillation generally have an alcohol content of not more than 96% v/v, and because there is a possibility that an infused liquor prepared with pure ethyl alcohol may be deficient in flavor.

In the present invention, alcohol content can be determined according to the method stipulated in the Official Analysis Method of the National Tax Agency of Japan (National Tax Agency Directive No. 6 in 2007, revised on June 22, 2007). To be specific, an alcohol solution of interest is distilled and a resulting distillate is measured using a vibrating viscometer for its viscosity at 15°C, which can be converted to an alcohol content according to the annex to the aforementioned Official Analysis Method of the National Tax Agency of Japan, which is titled "Table 2. Conversion between Alcohol Content and Density (15°C) or Specific Gravity (15/15°C)".

The proportion of kumquat citrus fruit to be infused relative to an alcohol to be used in infusing said fruit can be adjusted depending on the desired quality, but is preferably from 50 to 2000 g of the fruit per liter of the alcohol. A proportion of from 100 to 1000 g of the fruit per liter of the alcohol is more preferred because a refreshing citrus aroma can be perceived more prominently, and a proportion of from 200 to 500 g of the fruit per liter of the alcohol is still more preferred because the balance in flavor can be improved.

It is preferred that a sugar be added at the beginning of infusing kumquat citrus fruit. This is because the sugar can not only enhance the sense of taste but also increase extraction efficiency due to increased osmotic pressure, thereby making it easier to achieve the balance in flavor as desired in the present invention. The sugar content in the infused liquor is preferably a Brix value of not less than 15%, more preferably not less than 20%, still more preferably not less than 30%. The type of a sugar is not particularly limited, and examples include monosaccharides such as fructose and glucose, disaccharides such as sucrose which is a main component of table sugar, and honey.

In the process of preparing the infused liquor of the present invention, kumquat citrus fruit is left to be infused in an alcohol for a prescribed period of time to thereby cause the flavor components of the citrus fruit to be extracted in an alcohol. The time for infusion can be adjusted depending on the proportions of the contents of the fruit and alcohol, and the desired quality. For example, the time for infusion can be managed by monitoring the amount of any of the flavor components defined in this invention. The time for infusion varies with the proportions of the contents of the fruit and alcohol, but is preferably not shorter than 20 days, more preferably not shorter than 40 days, still more preferably not shorter than 60 days. If infusion is continued for too long a time, there may arise various problems, including the disruption of the balance between the flavor components extracted and the production of an undesired component due to a chemical reaction such as heat deterioration, which may lead to deterioration in the quality of the infused liquor. Thus, the upper limit for infusion time is preferably not longer than 12 months, more preferably not longer than 8 months, still more preferably not longer than 6 months. In this invention, it is particularly preferred to infuse kumquat as a citrus fruit and a sugar with a Brix value of not less than 15% in an alcohol with an alcohol content of not less than 40% v/v for the period of time of not shorter than 20 days, since the balance between the flavor components as desired in this invention can be achieved more easily. It is more particularly preferred to infuse kumquat and a sugar with a Brix value of not less than 30% in an alcohol with an alcohol content of not less than 50% v/v for the period of time of not shorter than 60 days.

As regards the temperature of infusion, extraction efficiency deteriorates with decreased infusion temperature and increases with increased infusion temperature, but in case oxidation, Maillard reaction, etc. proceeds leading to deterioration in quality, the infusion temperature is approximately in the range of preferably from 5 to 40°C, more preferably from 10 to 35°C, still more preferably from 15 to 30°C.

Any known container can be used in infusion. For example, infusion can be performed using a container such as a stainless or enameled steel tank.

After infusion for the prescribed period of time, the fruit is taken out and insoluble solids are removed. As for a means for removing insoluble solids, it is advisable to select an appropriate means depending on the degree of production of insoluble solids. For example, when insoluble solids are produced only in a trace amount, they can be removed by means of racking or the like. When insoluble solids are produced in large amounts, they can be removed by means of solid-liquid separation. To be specific, solid-liquid separation can be performed by a common separation means such as centrifugation, membrane filtration, diatomaceous earth filtration, or filtration with a filter paper. Two or more solid-liquid separation means may be used in combination for the purpose of improving operational efficiency.

### <Infused liquor>

The infused liquor of the present invention can be consumed straight or with water, carbonated water, ice, etc.

The infused liquor of this invention can also be optimally used as a blending material for mixing with other beverages or liquors. By using the inventive infused liquor as a blending material, both a refreshing citrus aroma and a mild, sweet, floral aroma can be imparted to beverages or liquors.

Examples of other beverages or liquors to be mixed with the inventive infused liquor include, but are not limited to, fruit juices and fruit juice-containing beverages, vegetable beverages, tea beverages, carbonated beverages, or various types of alcoholic beverages. Among them, alcoholic beverages (namely, liquors) are particularly preferred. The types of alcoholic beverages (liquors) are not particularly limited as long as they are commonly consumed ones. For example, the inventive infused liquor can be mixed with brewed alcoholic beverages such as rice wine and wine, distilled liquors such as brandy, whisky, rum and shochu, or dilutions thereof, or common alcoholic beverages such as cocktail and *chuhai* (shochu-based beverage). Those beverages mixed with the infused liquor can not only be provided with a refreshing flavor and a pleasant sweet floral aroma characteristic of citrus but also can give a crisp sensation in the mouth after drinking. In particular, the inventive infused liquor is superior in compatibility with fruit-derived liquors such as wine and brandy.

As regards the proportion of the inventive infused liquor to be blended with other beverage or liquor, the infused liquor is included at a concentration of preferably from 0.1 to 50% v/v, more preferably from 0.5 to 30% v/v, based on the finished beverage after blending. When the infused liquor is present only at a concentration of less than 0.1% v/v, the refreshing flavor of the infused liquor tends to be hard to sense in the finished beverage. On the other hand, when the infused liquor is present at a concentration of more than 50% v/v, the finished beverage tends to be intense in aroma but to lose the balance of beverage.

Alcoholic beverages obtained by blending the inventive infused liquor with other beverages or liquors may have added thereto a sugar, an acidulant, and/or any other various additives, as in the case of common beverages. Examples of various additives that can be added include, but are not limited to, flavorants, vitamins, pigments, antioxidants, emulsifiers, preservatives, seasonings, extracts, pH adjustors, and quality stabilizers.

The alcohol content of alcoholic beverages may be adjusted by adding water or an alcohol to them. The alcohol content of the beverages prepared according to the present invention (by blending the inventive infused liquor) is not particularly limited but is preferably in the range of approximately from 1 to 40% v/v.

The infused liquor of the present invention is characterized in that it has refreshing acidity characteristic of citrus but is not so much intense in acidity, and that it gives a pleasant mouthfeel when mixed with other beverages. The inventive infused liquor can be advantageously used, for example, as an acidity-imparting material in the process of preparing an alcoholic beverage with new flavor characteristics by mixing two or more liquors and flavorants.

Hereunder, the present invention will be described by way of working examples, but this invention is not limited to these examples.

### EXAMPLES

### (Example 1)

Two hundred kilograms of oval kumquats (whole fruit) produced in France were infused in a mixture of table sugar (syrup) and an alcohol for the period of 40 days. The alcohol used was neutral spirits with an alcohol content of 96%. The alcohol content and sugar content were adjusted with water so as to give an alcohol content of 60% v/v and a Brix value of 15% upon completion of the infusion. The total liquid volume was 600 L. After completion of the infusion, the obtained liquid was passed through a polypropylene filter with a pore size of 50 µm to remove solids. The resulting infused liquor was determined for the concentrations of aroma components (geranyl acetate and citral) and taste components (citric acid, malic acid, naringin). Also, the infused liquor was subjected to sensory evaluation on aroma and acidity by drinking it straight. Further, the infused liquor was stored at 50°C for 6 days and then subjected to sensory evaluation on deteriorated odor. Furthermore, the infused liquor was subjected to overall evaluation. The evaluations were conducted by the methods described below.

### <Determination of aroma components>

The concentrations of geranyl acetate and citral in the infused liquor were determined using gas chromatography. The conditions for gas chromatography are as detailed below.
- Column: Ultra2 [5% phenyl methyl siloxane; 50 m × 0.32 mm I.D. × 0.52 µm film thickness] (model No.: Agilent 19091B-115)
- Oven: Started at 40°C and increased to 325°C
- Detector: FID

### <Determination of taste components>

The concentrations of citric acid, malic acid and naringin were determined using high performance liquid chromatography (Agilent Infinity 1290 UHPLC system with Kinetex C18 column, using a water-methanol gradient).

### <Sensory evaluations>

The sensory evaluation on aroma was made based on the criteria detailed below.
O: Both refreshing citrus aroma and mild sweet floral aroma can be fully perceived.
△: Refreshing citrus aroma and mild sweet floral aroma can be slightly perceived.
×: No refreshing citrus aroma or mild sweet floral aroma can be perceived.

The sensory evaluation on deterioration in odor after storage at 50°C for 6 days was made based on the criteria detailed below.
O: Little or no deteriorated odor can be perceived.
×: Deteriorated odor can be perceived.

The sensory evaluation on acidity was made based on the criteria detailed below.
O: Deep acidity can be perceived.
△: Deep acidity can hardly be perceived.
×: Acidity is dull and lacking in depth.

The overall evaluation was made based on the criteria detailed below.
O: Superior in that both aroma and acidity are favorable and that little or no deteriorated odor can be perceived.
△: Slightly poor in aroma or acidity but acceptable as an infused liquor.
×: Lacking in aroma and unfit as an infused liquor.

### (Examples 2 to 10, Comparative Examples 1 to 9)

The same procedure as in Example 1 was conducted, except that the conditions were modified as shown in Table 1 below. As the "Monosacch (monosaccharide)" referred to in the "Sugar" column of Table 1, high-fructose corn syrup was used (Examples 3 and 7, Comparative Example 1). The sample of Comparative Example 8 was made by obtaining a fruit juice by squeezing kumquat (whole fruit) and mixing it with an alcohol with an alcohol content of 50% v/v. As referred to in the "Fruit" column of Table 1, the "Cut" means that a citrus fruit was used with its whole fruit being cut into pieces of suitable size (Comparative Examples 9 and 11). As the "Peel", lemon peel was used (Comparative Example 10). The "GF" as referred to in the "Fruit" column for Comparative Example 11 refers to grapefruit. The results are shown in Table 1.

**[Table 1]**

| | Fruit | | Infuse time | Alc. % | Sugar | | Geranyl acetate | | Citral | Malic vs citric | Malic | Citric | Naringin | Sensory test | | | |
|---|---|---|---|---|---|---|---|---|---|---|---|---|---|---|---|---|---|
| | | | | | Type | % | ppm | vs citral | ppm | | g/L | g/L | ppm | Aroma | Deteriorate | Acidity | Overall |
| Ex 1 | Kumquat | Whole | 40 | 60 | Table sugar | 15 | 2.6 | 0.11 | 23.30 | 054 | 3.7 | 6.8 | 9.6 | ○ | ○ | Δ | Δ |
| Ex 2 | Kumquat | Whole | 63 | 50 | Honey | 30 | 2.6 | 6.10 | 0.42 | 1.78 | 8.7 | 4.9 | ND | ○ | ○ | ○ | ○ |
| Ex 3 | Kumquat | Whole | 24 | 50 | Monosacch | 30 | 2.8 | 2.08 | 1.36 | 7.50 | 4.4 | 0.6 | ND | Δ | ○ | ○ | Δ |
| Ex 4 | Kumquat | Whole | 68 | 50 | Table sugar | 30 | 3.0 | 0.23 | 13.30 | 1.69 | 5.4 | 3.2 | ND | ○ | ○ | ○ | ○ |
| Ex 5 | Kumquat | Whole | 104 | 50 | Table sugar | 30 | 3.0 | 0.10 | 29.00 | 1.04 | 5.7 | 5.5 | 5.1 | ○ | ○ | ○ | ○ |
| Ex 6 | Kumquat | Whole | 51 | 55 | Table sugar | 23 | 3.4 | 0.45 | 7.50 | 1.19 | 5.1 | 4.3 | 6.9 | ○ | ○ | ○ | ○ |
| Ex 7 | Kumquat | Whole | 63 | 50 | Monosacch | 30 | 3.4 | 6.51 | 0.52 | 2.02 | 8.3 | 4.1 | ND | ○ | ○ | ○ | ○ |
| Ex 8 | Kumquat | Whole | 63 | 50 | Table sugar | 30 | 3.6 | 10.39 | 0.35 | 1.68 | 6.9 | 4.1 | 5.6 | ○ | ○ | ○ | ○ |
| Ex 9 | Kumquat | Whole | 82 | 50 | Table sugar | 30 | 3.8 | 0.31 | 12.20 | 1.43 | 5.3 | 3.7 | 5.6 | ○ | ○ | ○ | ○ |
| Ex 10 | Kumquat | Whole | 75 | 53 | Table sugar | 27 | 3.8 | 0.43 | 8.90 | 1.34 | 5.1 | 3.8 | 5.7 | ○ | ○ | ○ | ○ |
| Com. Ex 1 | Kumquat | Whole | 121 | 0 | Monosacch | 74 | 0.0 | - | 0.00 | 29.33 | 17.6 | 0.6 | ND | × | ○ | ○ | × |
| Com. Ex 2 | Kumquat | Whole | 121 | 0 | Table sugar | 66 | 0.0 | - | 0.00 | 4.95 | 10.4 | 2.1 | ND | × | ○ | ○ | × |
| Com. Ex 3 | Kumquat | Whole | 11 | 50 | None | 0 | 0.6 | 0.13 | 4.50 | 0.16 | 0.5 | 3.1 | ND | × | ○ | × | × |
| Com. Ex 4 | Kumquat | Whole | 63 | 50 | None | 0 | 0.7 | 0.10 | 7.10 | 0.16 | 2.4 | 14.8 | ND | Δ | ○ | × | × |
| Com. Ex 5 | Kumquat | Whole | 63 | 50 | None | 0 | 0.8 | 0.08 | 9.60 | 2.13 | 3.2 | 6.8 | 1.8 | × | ○ | O | × |
| Com. Ex 6 | Kumquat | Whole | 23 | 70 | None | 0 | 2.4 | - | 0.00 | 0.76 | 3.4 | 4.5 | 9.0 | × | ○ | Δ | × |
| Com. Ex 7 | Kumquat | Whole | 121 | 0 | Honey | 81 | 2.9 | - | 0.00 | 28.14 | 19.7 | 0.7 | ND | × | ○ | ○ | × |
| Com. Ex 8 | Kumquat | Juice | - | 50 | None | 0 | 1.4 | - | 0.00 | 0.15 | 0.3 | 2.0 | ND | × | Δ | × | × |
| Com. Ex 9 | Lemon | Cut | 22 | 80 | Table sugar | 10 | 5.7 | 0.13 | 43.80 | 0.05 | 0.3 | 6.1 | 4.7 | × | × | × | × |
| Com. Ex 10 | Lemon | Peel | 22 | 65 | None | 0 | 10.4 | 0.09 | 111.42 | 0.05 | 0.3 | 6.1 | ND | Δ | × | × | × |
| Com. Ex 11 | GF | Cut | 30 | 59 | None | 0 | 0.0 | - | 0.10 | 0.06 | 0.08 | 1.33 | ND | × | Δ | × | × |
| Com. Ex 12 | Orange | Whole | 44 | 44 | Table sugar | 17 | 0.0 | - | 0.00 | 9.18 | 3.03 | 0.33 | 0.0 | × | Δ | ○ | × |

The results shown in Table 1 demonstrate that the inventive infused liquor is superior in that it has both a refreshing citrus aroma and a mild, sweet, floral aroma, makes one feel the depth of acidity, and hardly deteriorates in aroma after storage. Further, the results for Comparative Example 8 reveal that no desired infused liquor can be obtained by simply mixing a citrus fruit juice with an alcohol.

### (Example 11)

The infused liquor of Example 5 was mixed with other different types of beverages shown in Table 2 below, and the beverages obtained by mixing were subjected to sensory evaluation. The infused liquor was added to those other beverages at a concentration of 1% v/v. The sensory evaluation was made based on the criteria detailed below.
O: Very good
O: Good
×: No good

**[Table 2]**

| Beverage | Sensory test | Remarks |
|---|---|---|
| Spirits | ⊚ | Both refreshing citrus aroma and sweet floral aroma are perceived, but no bitterness is sensed, and the aftertaste is pleasant. |
| Wine | ⊚ | Both refreshing citrus aroma and sweet floral aroma are perceived: compatibility with wine is excellent |
| Sweet fruit wine | ⊚ | Both refreshing citrus aroma and sweet floral aroma are perceived; compatibility with sweet fruit wine is excellent; the aftertaste is crisp. |
| Brandy | ⊚ | Both refreshing citrus aroma and sweet floral aroma are perceived: the depth of taste of brandy and a crisp aftertaste are perceived. |
| Liqueur | ⊚ | Both refreshing citrus aroma and sweet floral aroma are perceived: the taste is more fruity. |
| Whisky | ⊚ | The balance between whisky barrel aroma and citrus aroma is very fine: the aftertaste is more complex. |
| Malt beverage | ○ | Compatibility with a malt beverage is fine; citrus aroma and floral aroma provide a more refreshing and crisp taste. |
| *Chuhai* | ○ | Compatibility with *chuhai,* esp. citrus fruit *chuhai,* is fine; more refreshing citrusness and fruit juice sensation are perceived. |
| Low-calorie beverage | ○ | Both citrus aroma and floral aroma are perceived; the bad aftertaste of a high-sweetness sweetner is slightly improved. |
| Near-water beverage | ○ | Both citrus aroma and floral aroma are perceived; a good flavor balance is obtained when mixed with a near-water beverage. |
| Tea beverage | ○ | Both citrus aroma and floral aroma are perceived: the aftertaste of a tea beverage is made more crisp. |
| Coffee beverage | × | No citrus aroma or floral aroma is perceived: the aftertaste is not crisp due to the bitterness of coffee. |

### (Example 12)

An aqueous naringin solution (Sigma 71162-25G) was added to each of the infused liquor of Example 5 and different dilutions of the infused liquor Example 5 with water, whereby the naringin concentration was adjusted to the different levels shown in Table 3 below. The resulting samples were each subjected to sensory evaluation on bitterness. The sensory evaluation was made based on the criteria detailed below. The results are shown in Table 3.
O: Bitterness is hardly perceived and the aftertaste is crisp.
△: Bitterness is slightly perceived but the aftertaste is pleasant.
×: Bitterness is perceived and the aftertaste is unpleasant.

**[Table 3]**

| | Untreated | | | | Treated with aqueous naringin solution | | | | | |
|---|---|---|---|---|---|---|---|---|---|---|
| Final naringin level (ppm) | 0.85 | 1.0 | 2.5 | 5.1 | 10 | 25 | 50 | 100 | 150 | 200 |
| Example 5 | - | - | - | ○ | ○ | ○ or Δ | Δ | Δ | × | × |
| Example 5 (1/2 dilution) | - | - | ○ | - | ○ | ○ | ○ | Δ | × | × |
| Example 5 (1/5 dilution) | - | Δ | - | - | ○ | ○ | ○ | Δ | × | × |
| Example 5 (1/6 dilution) | × | - | - | - | ○ | ○ | ○ | Δ | × | × |

### (Example 13)

The same procedure as in Example 1 was conducted, except that the alcohol content was varied to 8% v/v, 10% v/v, 40% v/v, 50% v/v, and 80% v/v. As a result, particularly favorable infused liquors were obtained when the alcohol content was 40% v/v or higher.

### (Example 14)

The same procedure as in Example 1 was conducted, except that the Brix value was varied to 10%, 15%, 20%, 30%, and 60%. As a result, favorable infused liquors were obtained when the Brix value was 15% or higher, and more favorable infused liquors were obtained when the Brix value was 20% or higher.

### (Reference Example 1)

The following table shows the results of determining the concentrations of malic acid and citric acid in fruit juices of different citrus fruits. As shown in Table 4, the different citrus fruit juices *per se* contain citric acid at high concentrations and thus do not have a favorable malic acid/citric acid ratio as desired in the present invention.

**[Table 4]**

| Fruit | | Malic/citric ratio | Citric acid % | Malic acid % |
|---|---|---|---|---|
| Kumquat | Fruit juice | 0.11 | 2.8 | 0.3 |
| Grapefruit | Fruit juice | 0.06 | 1.33 | 0.08 |
| Unshiu orange | Fruit juice | 0.05 | 0.96 | 0.05 |
| Lemon | Fruit juice | 0.05 | 6.08 | 0.29 |
| Natsudaidai | Fruit juice | 0.03 | 1.96 | 0.05 |
| Valencia orange | Fruit juice | 0.00 | 0.98 | 0.00 |
| Lime | Fruit juice | 0.00 | 6.90 | 0.00 |

## Claims

1. An infused liquor obtained by infusing a citrus fruit in an alcohol, wherein the citrus fruit is kumquat, the infused liquor having:
a geranyl acetate concentration of not less than 2.5 ppm, a weight ratio of geranyl acetate to citral (geranyl acetate/citral ratio) of from 0.1 to 11, and a weight ratio of malic acid to citric acid (malic acid/citric acid ratio) of from 0.5 to 10.

2. The infused liquor according to claim 1, having an alcohol content of not less than 40% v/v.

3. The infused liquor according to claim 1 or 2, having a Brix value of not less than 15%.

4. The infused liquor according to any one of claims 1 to 3, having a naringin concentration of from 1.0 to 100 ppm.

5. The infused liquor according to any one of claims 1 to 4, having a citral concentration of from 0.3 to 40 ppm.

6. A beverage having the infused liquor according to any one of claims 1 to 5 mixed therewith at a concentration of from 0.1 to 50% v/v.

7. A process for preparing the infused liquor according to any one of claims 1 to 5, the process comprising the steps of
infusing a citrus fruit in an alcohol, wherein the citrus fruit is kumquat, and
removing insoluble solids remaining after infusion for a prescribed period of time.

8. A process for preparing a beverage, the process comprising the steps of:
infusing a citrus fruit in an alcohol, wherein the citrus fruit is kumquat, removing insoluble solids remaining after infusion for a prescribed period of time to thereby obtain the infused liquor according to any one of claims 1 to 5, and mixing the infused liquor obtained with other beverage.

## Patentansprüche

1. Infundierte Spirituose, die durch Infundieren einer Zitrusfrucht in einem Alkohol erhalten wird, wobei die Zitrusfrucht Kumquat ist, wobei die infundierte Spirituose aufweist:
eine Geranylacetat-Konzentration von nicht weniger als 2,5 ppm, ein Gewichtsverhältnis von Geranylacetat zu Citral (Geranylacetat/Citral-Verhältnis) von 0,1 bis 11 und ein Gewichtsverhältnis von Apfelsäure zu Zitronensäure (Apfelsäure/Zitronensäure-Verhältnis) von 0,5 bis 10.

2. infundierte Spirituose nach Anspruch 1, die einen Alkoholgehalt von nicht weniger als 40% Vol./Vol. aufweist.

3. infundierte Spirituose nach Anspruch 1 oder 2, die einen Brix-Wert von nicht weniger als 15% aufweist.

4. infundierte Spirituose nach einem der Ansprüche 1 bis 3, die eine Naringinkonzentration von 1,0 bis 100 ppm aufweist.

5. infundierte Spirituose nach einem der Ansprüche 1 bis 4, die eine Citralkonzentration von 0,3 bis 40 ppm aufweist.

6. Getränk, das mit der infundierten Spirituose nach einem der Ansprüche 1 bis 5 in einer Konzentration von 0,1 bis 50% Vol./Vol. vermischt ist.

7. Verfahren zur Herstellung der infundierten Spirituose nach einem der Ansprüche 1 bis 5, wobei das Verfahren die Schritte umfasst:
Infundieren einer Zitrusfrucht in einem Alkohol, wobei die Zitrusfrucht Kumquat ist, und Entfernen unlöslicher Feststoffe, die nach dem Infundieren für einen vorgeschriebenen Zeitraum zurückbleiben.

8. Verfahren zur Herstellung eines Getränks, wobei das Verfahren die Schritte umfasst:
Infundieren einer Zitrusfrucht in einem Alkohol, wobei die Zitrusfrucht Kumquat ist, Entfernen unlöslicher Feststoffe, die nach dem Infundieren für einen vorgeschriebenen Zeitraum zurückbleiben, um dadurch die infundierte Spirituose nach einem der Ansprüche 1 bis 5 zu erhalten, und Mischen der erhaltenen infundierten Spirituose mit einem anderen Getränk.

## Revendications

1. Liqueur infusée obtenue par infusion d'un agrume dans un alcool, dans laquelle l'agrume est le kumquat, la liqueur infusée ayant:
une concentration d'acétate de géranyle non inférieure à 2,5 ppm, un rapport pondéral de l'acétate de géranyle au citral (rapport acétate de géranyle/citral) de 0,1 à 11, et un rapport pondéral de l'acide malique à l'acide citrique (rapport acide malique/acide citrique) de 0,5 à 10.

2. Liqueur infusée selon la revendication 1, ayant une teneur en alcool non inférieure à 40 % v/v.

3. Liqueur infusée selon la revendication 1 ou 2, ayant une valeur Brix non inférieure à 15 %.

4. Liqueur infusée selon l'une quelconque des revendications 1 à 3, ayant une concentration de naringine de 1,0 à 100 ppm.

5. Liqueur infusée selon l'une quelconque des revendications 1 à 4, ayant une concentration de citral de 0,3 à 40 ppm.

6. Boisson ayant la liqueur infusée selon l'une quelconque des revendications 1 à 5 mélangée avec celle-ci à une concentration de 0,1 à 50 % v/v.

7. Procédé pour préparer la liqueur infusée selon l'une quelconque des revendications 1 à 5, le procédé comprenant les étapes de:
infusion d'un agrume dans un alcool, où l'agrume est le kumquat, et
retrait des solides insolubles restant après l'infusion pendant une période de temps prescrite.

8. Procédé pour préparer une boisson, le procédé comprenant les étapes de:
infusion d'un agrume dans un alcool, où l'agrume est le kumquat, retrait des solides insolubles restant après l'infusion pendant une période de temps prescrite pour obtenir ainsi la liqueur infusée selon l'une quelconque des revendications 1 à 5, et mélange de la liqueur infusée obtenue avec une autre boisson.
